# EUROPÄISCHE PATENTSCHRIFT

(11) **EP 1 322 503 B1**
(45) Veröffentlichungstag und Bekanntmachung des Hinweises auf die Patenterteilung: **02.07.2008**
(21) Anmeldenummer: 01980479.8
(22) Anmeldetag: 05.10.2001
(51) Int. Cl.: B60R 21/16, B60R 21/18, D01D 1/02

(54) **TEXTILES FLÄCHENGEWEBE UND VERFAHREN ZUR HERSTELLUNG DESSELBEN**
TEXTILE CONSTRUCTION AND METHOD FOR THE PRODUCTION THEREOF
STRUCTURE TEXTILE ET PROCEDE PERMETTANT DE LA PRODUIRE

(30) Priorität: 05.10.2000 DE 10049395
(43) Veröffentlichungstag der Anmeldung: 02.07.2003
(73) Patentinhaber: BST Safety Textiles GmbH, 79689 Maulburg (DE)
(72) Erfinder: BERGER, Johann, 73553 Alfdorf (DE); HUBER, Norbert, 79713 Bad Säckingen (DE); RUSCHULTE, Jörg, 79664 Wehr-Brennet (DE)
(74) Vertreter: Fischer, Matthias
(86) Internationale Anmeldenummer: PCT/EP2001/011512
(87) Internationale Veröffentlichungsnummer: WO 2002/028689

(56) Entgegenhaltungen:
- EP-A- 0 616 061
- DE-A- 3 903 216
- GB-A- 1 318 687
- US-A- 5 466 002

## Beschreibung

Die vorliegende Erfindung betrifft ein textiles Flächengebilde zur Verwendung in Personenrückhaltesystemen und Verfahren zur Herstellung desselben.

Bei den heute im Einsatz befindlichen Airbag-Systemen werden Airbags oder Luftsäcke verwendet, die grundsätzlich die Gefahr in sich bergen, daß eine auf einen aufgeblasenen Luftsack aufprallende Person durch den im Luftsack anstehenden hohen Druck zurückgeschleudert wird (Gummiballeffekt). Hierbei kann sich diese Person erhebliche Verletzungen zuziehen. Dieses Problem hat man bisher in recht aufwendiger Weise beispielsweise dadurch gelöst, daß man im Luftsack - von der Aufprallseite wegweisende - Ausströmöffnungen oder Ventile anordnete oder in diesem Bereich sog. Filtergewebe mit definierter Luftdurchlässigkeit vorsah. Damit wurde erreicht, daß der Luftsack beim Aufprall einer Person durch Ausströmen des Luftsackgases kollabieren und die auftreffende Person vergleichsweise weich auffangen konnte. Hiermit sind jedoch einige Nachteile verbunden. So können beim Einsatz von Filtergeweben mit definierter Luftdurchlässigkeit Schwankungen in der absoluten Luftdurchlässigkeit auftreten, die wiederum das Abströmen des Luftsackgases beim Aufprall der Person und damit die Aufprallhärte nachteilig beinflussen können. Außerdem können beim Kollabieren des Luftsacks durch darin befindliche Ausströmöffnungen Verbrennungsrückstände des Luftsackgenerators in die Fahrgastzelle gelangen, wodurch u.U. ebenfalls Verletzungen verursacht werden können.

Aus der DE 3903216A1 ist ein Airbag für Kraftfahrzeuge bekannt, der aus einem aufblasbaren Gewebekissen mit zwei aneinander angehefteten Gewebebahnen aus Kunststofffasern besteht, wobei als Fasermaterial Kunststofffasern dienen, von denen die scheuerfesten und sehr elastischen Polyamidfasern sowie die sehr elastischen Polypropylenfasern bevorzugt werden, da diese Fasern dem Airbag einen zusätzlichen vom Material bedingten Dämpfungseffekt verleiten. Die Außenseite des hier gezeigten Doppelpolgewebes kann beispielsweise mit Gummi oder Harz beschichtet sein.

Der Erfindung liegt die Aufgabe zugrunde, ein textiles Flächengebilde zu schaffen, bei dem die aus dem Stand der Technik bekannten Nachteile vermieden oder zumindest stark vermindert werden.

Die Aufgabe wird gelöst mit einem textilen Flächengebilde gemäß Anspruch 1.

Die Erfindung bezieht sich auf jede Art von textilen Flächengebilden. Mit diesem Begriff sind alle gewirkten, gestrickten, gewebten, geflochtenen, gehäkeltenoder auf sonstige Art aus Garnen oder Fasern hergestellten textilen Flächengebilde gemeint. Der Einfachheit halber soll jedoch im folgenden stets von einem, alle diese Varianten einschließenden, "Gewebe" die Rede sein.

Ganz allgemein spricht man heute von Airbags als Personenrückhalteorganen in Fahrzeugsicherheitssystemen. Daneben ist der Airbelt bekannt, der eine Kombination aus Sicherheitsgurt und Airbag ist. Da das erfindungsgemäße Gewebe sowohl für den Einsatz in einem Airbag als auch für den Einsatz in einem Airbelt vorgesehen ist, eben in allen Systemen, in denen ein Aufprall eines Körpers auf einen Sack oder sackartigen Gegenstand abgedämpft werden soll, sprechen wir ggfs. nicht von einem Airbaggewebe als solchem, sondern grundsätzlich als Verallgemeinerung und Vereinfachung von einem Luftsackgewebe oder schlicht Gewebe.

Das erfindungsgemäße Gewebe hat aufgrund seiner Konstruktion viele Vorteile gegenüber den bekannten Luftsackgeweben.

So ist es durch den Einsatz plastisch verformbarer Fäden, das sind Fäden, die eine verbleibende Dehnungskapazität aufweisen und dadurch imstande sind, sich bei Belastung zu längen, möglich, die Oberfläche des erfindungsgemäßen Gewebes durch einen darauf gerichteten Schlag (z. B. Aufprall eines Körpers) zu vergrößern. Die Fäden des Gewebes werden dabei schlagartig verstreckt, dadurch länger, ohne jedoch abzureißen. Beim Aufprall des Körpers auf einen mit dem erfindungsgemäßen Gewebe gefertigten Luftsack erfolgt durch eine Verstreckung des Gewebes eine Volumenvergrößerung. Dadurch ergibt sich eine Druckreduzierung im Luftsack, er wird weicher. Ebenfalls reduziert sich der Fadendurchmesser (Titerreduktion). Dadurch wird das Gewebe an seinen Bindungspunkten offener; es entstehen feinste "Öffnungen". Die Oberfläche wird entsprechend größer. Bei dieser Konstruktion des Gewebes wird nicht auf die Luftdurchlässigkeit schlechthin geachtet. Dies bietet große Vorteile betreffend die erforderliche Herstellungspräzision. Die geforderte gleichmäßige Luftdurchlässigkeit wird dadurch erreicht, daß das erfindungsgemäße Luftsackgewebe mit einer Beschichtung versehen ist. Diese Beschichtung wird so ausgewählt, daß sie auch bei stärkster Dehnung (infolge einer Oberflächenvergrößerung) die Luftdurchlässigkeit im erforderlichen Bereich konstant hält.

Ein weiterer Vorteil dieser Verfahrensweise ist, daß in der Herstellungsphase für das Luftsackgewebe der Faktor Luftdurchlässigkeit mehr oder weniger ignoriert werden kann, da diese über die zusätzlich aufzubringende Beschichtung geregelt wird. Damit ist ein beträchtlicher Kostenvorteil in der Herstellung verbunden.

Die erfindungsgemäße Ausbildung des Luftsackgewebes ergibt sich, wenn in mindestens einem Fadensystem plastisch verformbare Fäden oder Garne eingesetzt sind, die dem Fadensystem die Möglichkeit geben, sich bei Bedarf mehrstufig zu dehnen. Die erste Dehnungsstufe findet in der Aufblasphase statt, in der sich das Garn im gleichen Maße wie heute übliche Garne dehnt. Eine weitere Dehnungsstufe beginnt beim Aufprall des Körpers. Das verformbare Garn dehnt sich im Rahmen der verbleibenden Dehnungskapazität weiter. Durch diese zusätzliche Dehnung (Nachverstreckung) erfolgt die bereits diskutierte Volumenvergrößerung.

Weiter wird als Beschichtung eine hochelastische Folie oder Beschichtung aufgebracht. Dies hat den Vorteil, daß die Folie eine Dehnung aufweist, die dem Maß der Nachverstreckung des Gewebes angepaßt ist. Das mit der Folie kaschierte Gewebe behält die geforderte Luftdurchlässigkeit. Es wird durch die Folie gleichsam "abgedichtet". Die Verwendung des erfindungsgemäßen Luftsackgewebes in Personenrückhaltesystemen bietet noch einen weiteren Vorteil, nämlich daß im Anwendungsfall für den Airbag eine kürzere Aufblaszeit als bei üblichen Airbag-Geweben möglich ist, da während des Aufblasens vor Erreichen der vollen Form (wie beim Stand der Technik) kein Aufblasgas entweichen kann. Damit ist die Aufblaszeit kürzer als bei bisher eingesetzten Geweben. Der mit einem erfindungsgemäßgen Gewebe versehene Airbag bietet somit in kürzerer Zeit Aufprallschutz als ein herkömmlicher Airbag. Der Fachmann kann diesen Zeitgewinn gar nicht hoch genug einschätzen.

Die Erfindung wird im folgenden anhand einer Zeichnung kurz beschrieben.
- Fig. 1: zeigt schematisch ein erfindungsgemäßes Gewebe vor dem Aufprall eines Körpers im Querschnitt.
- Fig. 2: zeigt einen Ausschnitt eines erfindungsgemäßen Gewebes nach dem Aufprall eines Körpers.

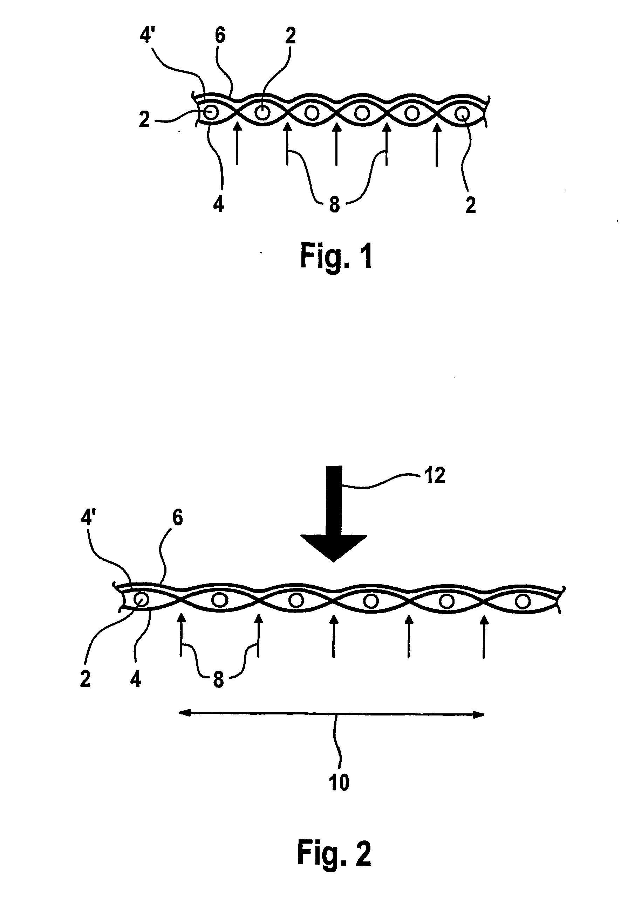

In Fig. 1 ist sehr stark vereinfacht ein Luftsackgewebe im Querschnitt, in Kettrichtung gesehen, dargestellt. Hierbei sind Kettfäden 2 als kleine, in der Zeichenebene liegende Kreise dargestellt, gleichsam als Schnittbild der Kettfäden 2. Schußfäden 4 und 4' verlaufen - der Einfachheit halber wurde hier eine simple Leinwandbindung skizziert - in der Zeicluiungsebene von links nach rechts und umschlingen in bekannter Weise die Kettfäden 2. Auf der (in Fig. 1) oberen Oberfläche des hier dargestellten Gewebes ist eine Folie 6 aufgebracht, die beispielsweise durch thermische Verbindung oder andere übliche Klebstoffe auf das Gewebe aufgebracht wird. Die in Fig. 1 dargestellte Zuordnung von Schußfäden 4 und 4' und Kettfäden 2 entspricht dem Zustand des Luftsackgewebes, wie es aus der Webmaschine kommt und nach der Beschichtung aussieht. Pfeile 8 sollen die durch das Gewebe hindurch dringenwollende oder -könnende Luftmenge, bzw. die Luftdurchlässigkeit des Gewebes darstellen. Die Luft muß also zwischen Fäden oder Kreuzungspunkten von Fäden durch das Gewebe hindurch gelangen.

Fig. 2 zeigt das eben in Fig. 1 beschriebene Gewebe, jedoch nach einem Aufprall eines Körpers, der durch einen symbolisch von oben nach unten weisenden Pfeil 12 angedeutet ist. Die Reaktion auf den Schlag eines Körpers in Richtung des Pfeils 12 ergibt ein Dehnen des Luftsackgewebes in Richtung des Doppelpfeils 10 von Fig. 2. Das Gewebe hat sich hierbei insoweit verändert, als die Schußfäden 4 und 4' gedehnt wurden und damit der Abstand zwischen den Kettfäden 2 vergrößert wurde. Der Vergleich der Luftsackgewebeabschnitte von Fig. 1 und Fig. 2 verdeutlicht die Oberflächenvergrößerung des Gewebes aufgrund der plastischen Verformung bzw. Verstreckung der Schußfäden 4 und 4'.

Nicht geändert hat sich jedoch im verstreckten Gewebe gegenüber dem nicht verstreckten Gewebe die Luftdurchlässigkeit, die hier wiederum mit den Pfeilen 8 angegeben ist. Die Beschichtung 6 ist so gewählt, daß sie auch bei stärkster Oberflächenvergrößerung keine Veränderung des für die Luftdurchlässigkeit des Luftsackgewebes geforderten Wertes zuläßt.

## Patentansprüche

1. Textiles Flächengebilde zur Verwendung in Personenrückhaltesystemen, wobei es
a) plastisch verformbare Fäden enthält, die eine verbleibende Dehnungskapazität aufweisen, und die sich bei einer Belastung in wenigstens einer Flächenrichtung
a1) in einer ersten Dehnungsstufe in der Aufblasphase dehnen, und
a2) in einer weiteren Dehnungsstufe bei Aufprall eines körpers eine Vergrößerung der Gewebeoberfläche zulassen,
und
b) wobei es mit einer Beschichtung, die eine konstante Luftdurchlässigkeit aufweist, versehen ist.

2. Textiles Flächengebilde nach Anspruch 1, **dadurch gekennzeichnet, dass** die Beschichtung elastisch ist.

3. Textiles Flächengebilde nach Anspruch 2, **dadurch gekennzeichnet, dass** die elastische Beschichtung in einer Folie besteht.

4. Airbag, **dadurch gekennzeichnet, dass** er wenigstens teilweise hergestellt ist aus einem Gewebe gemäß Anspruch 1, 2 oder 3.

5. Airbelt, **dadurch gekennzeichnet, dass** er wenigstens teilweise hergestellt ist aus einem Gewebe gemäß Anspruch 1, 2 oder 3.

## Claims

1. Textile sheeting for use in passenger restraint systems including
a) plastically deformable threads comprising a remanent stretch capacity and which under loading in at least one sheeting direction
a1) stretch in a first stretch stage during the inflation phase, and
a2) permit an enlargement of the fabric surface in a further stretch stage on body impact
and
b) a coating comprising a constant permeability to air.

2. The textile sheeting as set forth in claim 1, **characterized in that** the coating is elastic.

3. The textile sheeting as set forth in claim 2, **characterized in that** the elastic coating consists of a film.

4. An air bag, **characterized by** it being fabricated at least in part of a fabric as set forth in claim 1, 2 or 3.

5. An air belt, **characterized by** it being fabricated at least in part of a fabric as set forth in claim 1, 2 or 3.

## Revendications

1. Structure textile plate destinée à être utilisée dans des systèmes de retenue de personnes, la structure comprenant
a) des fils plastiquement déformables qui présentent une capacité d'extension restante et qui sous une charge se détendent dans au moins une direction de la surface de la structure,
a1) dans une première étape d'extension dans la phase de gonflement, et
a2) dans une étape d'extension supplémentaire permettent un agrandissement de la surface du tissu lors de la collision avec un corps
et
b) étant pourvue d'un revêtement qui présente une perméabilité constante à l'air.

2. Structure textile plate selon la revendication 1 **caractérisée en ce que** le revêtement est élastique.

3. Structure textile plate selon la revendication 2, **caractérisée en ce que** le revêtement élastique consiste en un film.

4. Airbag, **caractérisé en ce qu'**il est au moins partiellement fabriqué en un tissu selon les revendications 1, 2 ou 3.

5. Airbelt, **caractérisé en ce qu'**il est au moins partiellement fabriqué en un tissu selon les revendications 1, 2 ou 3.
